# EUROPEAN PATENT APPLICATION

(11) **EP 2 890 074 A1**
(43) Date of publication of application: **01.07.2015**
(21) Application number: 13306902.1
(22) Date of filing: 31.12.2013
(51) Int. Cl.: H04L 29/06, H04W 12/04, H04W 12/10, H04L 9/08, H04L 9/32

(54) **Method for transmitting push messages**

(71) Applicant: Gemalto SA, 92190 Meudon (FR)
(72) Inventor: Chan, Keng Kun, 92190 Meudon (FR); Sharma, Vikram, 92190 Meudon (FR); Li, Zhiping, 92190 Meudon (FR); Ilmy, Muhammad Bahari, 92190 Meudon (FR)
(74) Representative: Lotaut, Yacine Diaw

(57) **Abstract**

The invention relates to a method (100) for transmitting push messages to several terminals, said method (100) comprising the following steps:
- Sending (101), from a sender server, a push message to at least a push manager server, said push message being sent via a secure communication protocol,
- adding (103) a digital signature to the push message received by the push manager server,
- sending (104), from the push manager server, the push message and the digital signature to several terminals.

## Description

### FIELD OF THE INVENTION

The present invention relates to a method for transmitting push messages from a sender server to several terminals and also to a method for establishing a secure communication between a user terminal comprising a SIM application and a push manager server.

### PRIOR ART OF THE INVENTION

Usually, a brand server sends push advisement messages to several push servers via a transmission protocol. Each push server serves as a gateway between the brand server and mobile terminals. Each push server is used by a developer of an application program installed in a mobile terminal to transmit push advisement messages to the application program.

More particularly, a push server relays a push advisement message sent from the brand server to at least a mobile terminal to which it is connected via a transmission protocol.

Conventional push servers, when transmitting push advisement messages to mobile terminals do not guarantee that push advisement messages come from an authorized brand server. Therefore, unauthorised push advisement messages can be sent to mobile terminals.

### SUMMARY OF THE INVENTION

Accordingly, the purpose of the present invention is to propose a method for transmitting authorized push messages from a sender server to several terminals.

To achieve these advantages, and in accordance with the purpose of the invention as embodied, in a not limited embodiment, the present invention provides a method for transmitting push messages to several terminals, said method comprising the following steps:
- sending, from a sender server, a push message to at least a push manager server, said push message being sent via a secure communication protocol,
- adding a digital signature to the push message received by the push manager server,
- sending, from the push manager server, the push message and the digital signature to several terminals, more particularly to the SIM application installed in each terminal.

The sender server (which can belong to a brand) sends a push message to the push manager server, and then the push manager server send the push message to SIM applications. Diversified applicative keys (the digital signature) are used. The digital signature can be formed by a signature key and ensures that there is no hacker or intruder to imitate the brands by sending false marketing campaign.

In addition to the main features aforementioned in the previous paragraph, the method according to the invention may also have one or more of the additional features below, taken individually or in any technically feasible combination.

In another aspect of the present invention, said method comprises the step of distributing the push message to a plurality of push manager server, said distribution being generated by a global smart message service.

In another aspect of the present invention, the digital signature mechanism uses the MAC4 3-DES CBC algorithm.

The present invention also relates to a method for establishing a secure communication between a user terminal comprising a SIM application and a push manager server, when said SIM application detects that there is no applicative key configured, said method triggers the following steps:
- generating a random client number, said random client number being generated by said SIM application,
- Sending, to the push manager server, said random client number, an application proprietary protocol related fields and a session id,
- Generating a random server number, said random server number being generated by said push manager server,
- Generating a first signature key, said first signature key being generated by said push manager server,
- Sending, to said SIM application, said random server number, said first signature key and said session id,
- Checking said session id, said session id being checked by said SIM application,
- generating a second signature key if said session id received from the push manager server is similar to said session id sent by said SIM application, said second signature key being generated by said SIM application,
- decreasing the provision counter by 1, said decrease being generated by said SIM application,
- generating a status code, said status code indicating if the second signature key is successful generated or unsuccessful generated, said status code being generated by said SIM application,
- generating a signed acknowledgment, said signed acknowledgment being generated by using the second signature key to encrypt the status code, said signed acknowledgment being generated by said SIM application,
- sending , to the push message server, said signed acknowledgment and said session id,
- decrypting said encrypted status code by using said second signature Key, If said status code is:
   ○ successful, then the secure communication is established,
   ○ unsuccessful, then the secure communication is not established.

In another aspect of the present invention, the second signature key is generated using the proprietary Hash-based Message Authentication Code cryptography.

In another aspect of the present invention, when the secure communication is not established the push manager server triggers the following steps:
- Sending, from the push manager server, a message of triggering to the SIM application,
- checking if :
   o the TPDA to send back the MO is configured,
   o the provision counter is greater than 0, and
   o the second signature key is configured.

In another aspect of the present invention, when the TPDA to send back the MO is configured, the provision counter is greater than 0, and the second signature key is not configured, then the steps of the method for establishing a secure communication between a user terminal comprising a SIM application and a push manager server are triggered.

In another aspect of the present invention, when the TPDA to send back the MO is configured, the provision counter is greater than 0, and the second signature key is configured, then the SIM application send the signed acknowledgement and the session id to the push manager server.

In another aspect of the present invention, the signed acknowledgement is generated by using the second signature key to encrypt the status code.

### BRIEF DESCRIPTION OF THE INVENTION

Other characteristics and advantages of the present invention will become apparent upon reading the following description of embodiments, which are naturally given by way of non-limiting examples, and in the attached drawing, in which:
- Figure 1 depicts a not limited embodiment of a method for transmitting push messages from sender server to several terminals according to the invention,
- Figure 2 illustrates an architecture adapted and construed to perform the method for transmitting push messages from sender server to several terminals according to the invention,
- Figure 3 depicts a not limited embodiment of a method for establishing a secure communication between a user terminal comprising a SIM application and a push manager server,
- Figure 4 illustrates an example of generating a signature key according to the invention.

The same references are used in different figures to designate same elements.

### DETAILED DESCRIPTION OF THE INVENTION

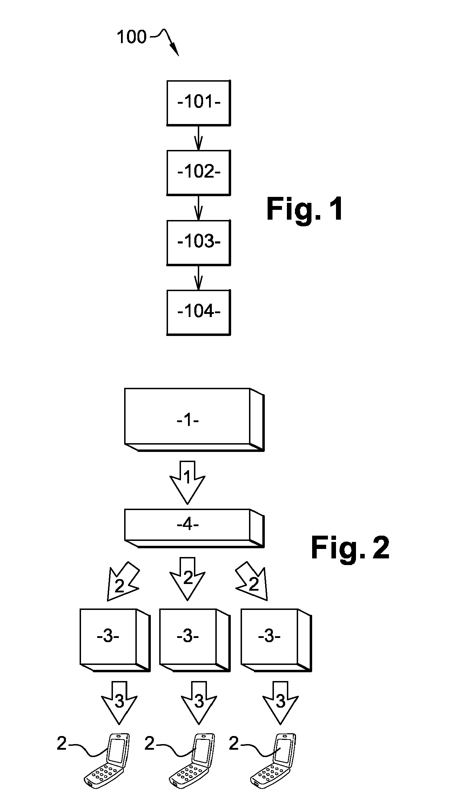

Figure 1 depicts a not limited embodiment of a method 100 for transmitting push messages from sender server 1 to several terminals 2. Figure 2 illustrates an architecture adapted and construed to perform the method 100.

The method 100 comprises a step of sending 101, from the sender server 1, a push message to three push manager servers 3, the push message being sent via a secure communication protocol. The secure communication protocol is, for instance, the Hypertext Transfer Protocol Secure (also known as HTTPS). Furthermore, a username and a password are sent with the push message. So, the sender server needs to send the push message with the username and password information in HTTPS. This prevents unauthorized server to launch message as it needs to present the username and the password information.

In a not limited example, the sender server 1 belongs to a brand and is used to send marketing campaigns. In this not limited example, the push message is a marketing campaign.

The method 100 comprises also a step 102 of distributing the push message to the three push manager servers 3, the distributing being realized by a global smart message service 4, such as for example the Netsize Global Smart Message Service.

Using Netsize Global Smart Message Service, allows launching secure smart message campaign through following:
- Simple Object Access Protocol Application Programming Interface (also known as SOAP API WebServices). So, the brand can integrate their system with Netsize with using SOAP API that run on HTTPS. The brand needs to pass the username and password information in the SOAP XML. This prevent unauthorized brand to launch the secure smart message campaign as it needs to present the username and the password information.
- SaaS GUI. So, the brand people can login to Netsize SaaS GUI that run on HTTPS from their browser. The login requires username and password. This will prevent unauthorized brand people to login to the Netsize SaaS GUI.

In this example, the global smart message service 4 sends the campaign created by the brand to the three connected push manager server 3. The communication between the global smart message service 4 and the three connected push manager server 3 is performed through HTTPS connections. Moreover, username and password are used to authenticate the push server 1.

Furthermore, the method 100 comprises a step of adding 103 a digital signature to the push message received by the push manager servers 3. In a not limited embodiment, the digital signature mechanism uses the MAC4 3-DES CBC algorithm.

The method 100 comprises also a step 104 of sending, from each push manager server 3, the push message and the digital signature to the three terminals 1. In not limited embodiments, the three terminals are mobile terminals or smartphones.

The digital signature allows adding an applicative key allowing to transmit secure push message between the push manager server 3 and the terminals 2.

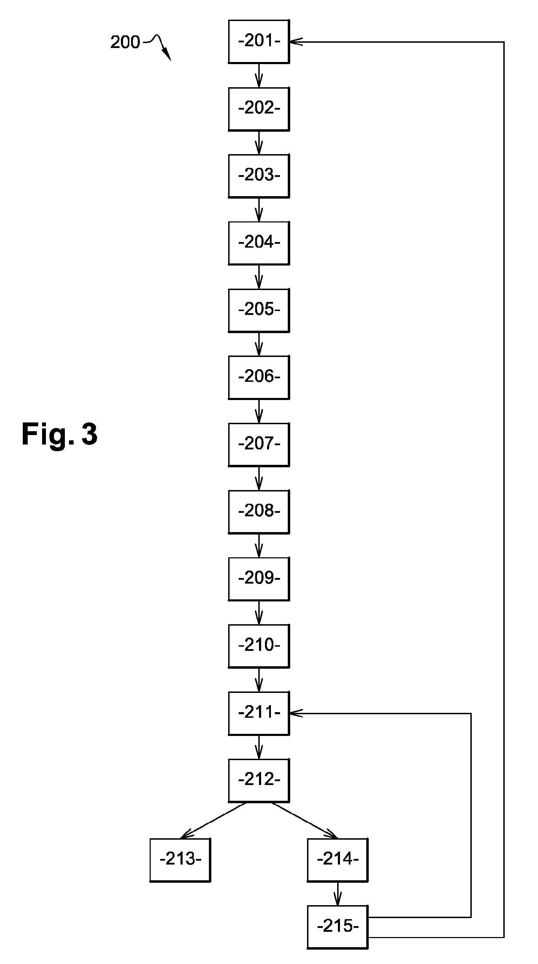

The figure 3 depicts a not limited embodiment of a method 200 for establishing a secure communication between a user terminal 2 comprising a SIM application and a push manager server 3.

According to the method 200, when the SIM application detects that there is no applicative key configured, the method 200 triggers the following steps. In other terms, when the terminal 2 starts, the SIM application (also named SIM applet) detects that there is no applicative key configured in the SIM Application 10. The SIM application triggers automatically the followings steps.

More particularly, the method 200 comprises a step 201 of generating a random client number. The random client number is generated by the SIM application. In a not limited embodiment, the random client number is of 32 bytes or more. In a not limited embodiment, the random client number is generated by an integrated circuit card identifier (also known as ICCID) using a unique number given to every SIM card.

The method 200 comprises a step 202 of sending, to the push manager server 3, the random client number, an application proprietary protocol related fields and a session id. It could be noted that the session id is used to maintain throughout the key exchange session.

The method 200 comprises also the step 203 of generating a random server number. The random server number is generated by the push manager server 3. In a not limited embodiment, the random server number is of 32 bytes or more.

The method 200 comprises also the step 204 of generating a first signature key. The first signature key is generated by the push manager server 3. In a not limited embodiment, the push manager server 3 generates the first signature key by using the proprietary HMAC (Hash-based Message Authentication Code) cryptography.

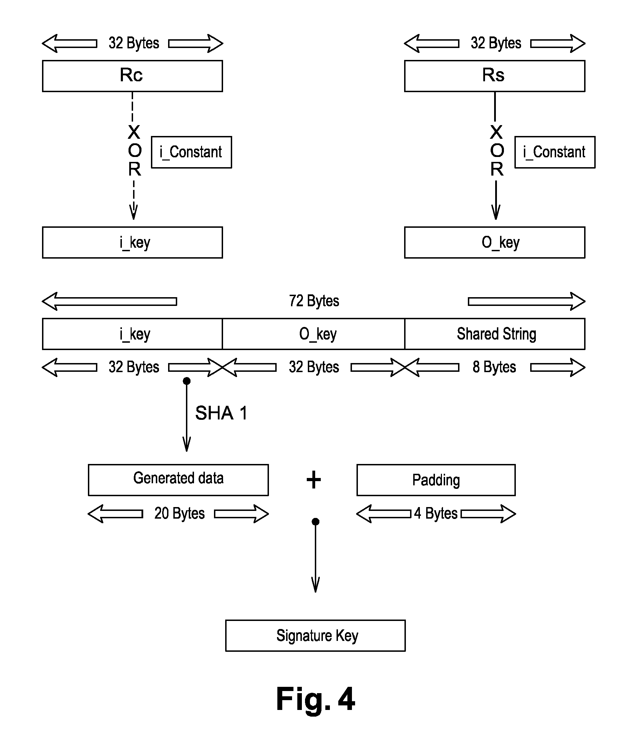

The figure 4 illustrates an example of generating the first signature key via the HMAC.

The First Key (key in left column) depicts the random client number Rc of 32 bytes and the Second Key (key in the right column) depicts the random server number Rs of 32 bytes.

Then, the random client number Rc and the random server number Rs are XORed. The random client number Rc XORed forms an i_Key and the random server number Rs forms an O_Key.

Then, the i_Key and O_Key are used as an input with a "shared string". The shared string is a secret message known by the push manager server 3 and the SIM application. In a not limited example, the shared string is of 8 bytes.

Then, using the SHA1 hash algorithm, a 20 bytes data is generated from the i_Key plus the O_Key plus the sharing string. Furthermore, 4 bytes of padding based on random client and random server are added.

Therefore, in this not limited example, the 20 bytes data plus said 4 bytes of padding form the first signature key.

The method 200 comprises also the step 205 of sending, to the SIM application, the random server number Rs, the first signature key and the session id.

The method 200 comprises also the step 206 of checking the session id. The session id is checked by the SIM application. If the session id is different from the session id sent by the SIM application during the step 202 of sending, to the push manager server 3, the random client number, an application proprietary protocol related fields and a session id, then the SIM application 10 ignore the message that contain the random server number Rs received from the push manager server 3.

The method 200 comprises a step 207 of generating a second signature key if said session id received from the push manager server 3 is similar to the session id sent by the SIM application. The second signature key is generated by the SIM application. The second signature key is generated by the SIM application using for example the HMAC (Hash-based Message Authentication Code) cryptography using the same method that the method depicted in figure 4.

In a not limited example, the first and the second signature keys are similar in order for the push manager server and SIM application to communicate properly. In this embodiment, it is used symmetric key algorithm to generate and verify the signatures.

The method 200 comprises a step 208 of decreasing the provision counter by 1. The SIM application decreases the provision counter by 1. The provision counter is used to limit the number of time we can do the method 200. This is to prevent unwelcome spamming.

The method 200 comprises a step 209 of generating a status code, the status code indicating if the second signature key is successful generated or unsuccessful generated. The status code is understood by the SIM application and the push message server 3.

A not limited example of a status code showing that the second signature key is correctly generated is 0x00. A status code showing that the second second signature key is not correct must be different than 0x00.

The method 200 comprises a step 210 of generating a signed acknowledgment, the signed acknowledgment being generated by using the second signature key to encrypt the status code. The status code can be encrypted by using a 3DES Algorithm.

Then, the method 200 comprises a step 211 of sending, to the push message server 3, the signed acknowledgment and the session id.

The method 200 comprises a step 212 of decrypting the signed acknowledgment. More particularly, the encrypted status code is decrypted by using said second signature key. In other terms, the push message server 3 receives the signed acknowledgment from the SIM application and uses the second signature key to decrypt the status code.

Besides, if the status code is successful (i.e. in the example, the status code is equal to 0x00), then the secure communication is established 213.

However, if the status code is unsuccessful (i.e. in the example, the status code is different from 0x00), then the secure communication is not established. When the secure communication is not established, the push manager server 3 triggers the following steps:
- Sending 214, from the push manager server 3, a message of triggering to the SIM application,
- Then, checking 215, if:
   o the TPDA to send back the MO is configured,
   o the provision counter is greater than 0, and
   o the second signature key is configured.

In a not limited embodiment, when the TPDA to send back the MO is configured, the provision counter is greater than 0, and the second signature key is not configured, then the steps of the method 200 for establishing a secure communication between a user terminal 2 comprising a SIM application and a push manager server 3 are triggered.

In a not limited embodiment, when the TPDA to send back the MO is configured, the provision counter is greater than 0, and the second signature key is configured, then the SIM application send 211 the signed acknowledgement (The second signature key is already configured) and the session id to the push manager server 3. Then, the step 212 of decrypting the signed acknowledgment is triggered. More particularly, the encrypted status code is decrypted by using said second signature key. In other terms, the push message server 3 receives the signed acknowledgment from the SIM application and uses the second signature key to decrypt the status code. If the status code is successful (i.e. in the example, the status code is equal to 0x00), then the secure communication is established 213.

## Claims

1. Method (100) for transmitting push messages to several terminals (2), said method (100) comprising the following steps:
- Sending (101), from a sender server (1), a push message to at least a push manager server (3), said push message being sent via a secure communication protocol,
- adding (103) a digital signature to the push message received by the push manager server (3),
- sending (104), from the push manager server (3), the push message and the digital signature to several terminals (2).

2. Method (100) for transmitting push message according to claim 1, said method (100) comprising the step (102) of distributing the push message to a plurality of push manager server (3), said distributing being generated by a global smart message service.

3. Method (100) for transmitting push message according to any of the preceding claims, wherein the digital signature mechanism uses the MAC4 3-DES CBC algorithm.

4. Method (200) for establishing a secure communication between a user terminal (2) comprising a SIM application and a push manager server (3), when said SIM application detects that there is no applicative key configured, said method (200) triggers the following steps:
- Generating (201) a random client number (Rc), said random client number (Rc) being generated by said SIM application,
- Sending (202), to the push manager server (3), said random client number (Rc), an application proprietary protocol related fields and a session id,
- Generating (203) a random server number (Rs), said random server number (Rs) being generated by said push manager server (3),
- Generating (204) a first signature key, said first signature key being generated by said push manager server (3),
- Sending (205), to said SIM application, said random server number (Rs), said first signature key and said session id,
- Checking (206) said session id, said session id being checked by said SIM application,
- generating a second signature key (207) if said session id received from the push manager server (3) is similar to said session id sent by said SIM application, said second signature key being generated by said SIM application,
- decreasing (208) the provision counter by 1, said decrease being generated by said SIM application,
- generating (209) a status code, said status code indicating if the second signature key is successful generated or unsuccessful generated, said status code being generated by said SIM application,
- generating (210) a signed acknowledgment, said signed acknowledgment being generated by using the second signature key to encrypt the status code, said signed acknowledgment being generated by said SIM application,
- sending (211), to the push message server (3), said signed acknowledgment and said session id,
- decrypting (212) said encrypted status code by using said second signature Key, If said status code is:
o successful, then the secure communication is established (213),
o unsuccessful, then the secure communication is not established.

5. Method (200) for establishing a secure communication according to the preceding claim 4, wherein the second signature key is generated using the proprietary Hash-based Message Authentication Code cryptography.

6. Method (200) for establishing a secure communication according to any of the preceding claims 4 or 5, wherein when the secure communication is not established the push manager server (3) triggers the following steps:
- Sending (214), from the push manager server (3), a message of triggering to the SIM application,
- checking (215) if :
o the TPDA to send back the MO is configured,
o the provision counter is greater than 0, and
o the second signature key is configured.

7. Method (200) for establishing a secure communication according to any of the preceding claims 4 to 6, wherein when the TPDA to send back the MO is configured, the provision counter is greater than 0, and the second signature key is not configured, then the steps of the method (200) are triggered.

8. Method (200) for establishing a secure communication according to any of the preceding claims 4 to 6, wherein when the TPDA to send back the MO is configured, the provision counter is greater than 0, and the second signature key is configured, then the SIM application send (211) the signed acknowledgement and the session id to the push manager server (3).

9. Method (200) for establishing a secure communication according to the preceding claim 8, wherein the signed acknowledgement is generated by using the second signature key to encrypt the status code.
